# EUROPÄISCHE PATENTANMELDUNG

(11) **EP 0 530 150 A1**
(43) Veröffentlichungstag der Anmeldung: **03.03.1993**
(21) Anmeldenummer: 92810646.7
(22) Anmeldetag: 24.08.1992
(51) Int. Cl.: D06L 1/14, D06M 16/00, D06M 10/00

(54) **Verfahren zur Behandlung von Textilmaterial**

(30) Priorität: 27.08.1991 DE 4128256
(71) Anmelder: SANDOZ LTD., CH-4002 Basel (CH)
(72) Erfinder: Fornelli, Saverio, CH-4053 Basel (CH); Souren, Illa, NL-6291 Vaals (NL)

(57) **Zusammenfassung**

Verfahren zur Behandlung eines textilen Materials, wobei das Material zunächst mit einer Applikationslösung getränkt wird und nach Erreichen des angestrebten Effekts Abbauprodukte und Reste der Applikationslösung ausgewaschen werden, wobei die Applikationslösung für das textile Material in einem Gewichtsverhältnis von < 1:2 gleichmässig auf das kontinuierlich transportierte Material aufgebracht wird und dieses anschliessend für eine Dauer von 1 bis 120 Sekunden einem Hochfrequenzfeld zwischen 10 und 50 MHz als Energievektor ausgesetzt wird.

## Beschreibung

Die Erfindung betrifft ein Verfahren zur veredelnden Behandlung von Textilmaterial, z.B. Bleichen, Entfetten, Entschlichten, Entbasten oder Entkletten. Zur Durchführung des Verfahrens wird das Material zunächst mit einer der jeweiligen Behandlung entsprechenden wässrigen Applikationslösung getränkt. Nach Erreichen des angestrebten Behandlungseffekts werden Abbauprodukte und Reste der Applikationslösung ausgewaschen.

Behandlungsverfahren dieser Art sind allgemein bekannt. Es handelt sich dabei z.B. um die Peroxidbleiche von Roh- und/oder entschlichteter Baumwolle, von pflanzlichen Fasern, wie Leinen, Jute und Halbleinen, oder von tierischen fasern, wie Wolle und Seide, die enzymatische Bleiche regenerierter Zellulosefasern, (z.B. Viskose, Modal und Zellwolle), das Abschälen von synthetischen Fasern, u.a. auch von Polyamidfasern, das enzymatische Entschlichten von mit Stärkeschlichten behafteter Rohbaumwolle, das enzymatische Erzeugen eines sogenannten Old-fashion-Look auf gefärbtem Baumwollgewebe, das enzymatische Entbasten von Seide und die filzfreie Ausrüstung sowie Reinigung von Wolle, die protonische Säurebehandlung von stark pigmentierter und mineralhaltiger Baumwolle und das enzymatische Abkochen von Baumwolle und anderen Zellulosefasern.

Die bekannten Textil-Behandlungsverfahren sind im allgemeinen mit erheblichen Nachteilen behaftet: Man benötigt grosse Mengen von Chemikalien, deren Entsorgung sehr aufwendig ist, wenn man Umweltschädigungen vermeiden will und ferner ist der apparative und zeitliche Aufwand meist beträchtlich.

Zu einzelnen ist u.a. festzuhalten, dass
- bei meist oxidativen/reduktiven einstufigen Verfahren mit Peroxidlösungen das so vorbehandelte Material einen nur unzureichenden Weissgrad erhalten kann;
- zur kontinuierlichen Verfahrensweise grossvolumige Dämpfer und entsprechende weitere Einrichtungen benötigt werden;
- teilweise Zwischentrocknungen mit entsprechendem Energieaufwand durchgeführt werden müssen, um weitere hochkonzentrierte Lösungen beim Abkochen, Komplexieren, Bleichen und Auswaschen wirksam werden zu lassen;
- ein grosser Chemikalienverlust unvermeidlich ist, weil insbesondere die OH-Gruppen der Zellulose langsamer mit den Chemikalien reagieren als mit den Oh-Gruppen des Wassers und folglich die Reaktionen unspezifisch verlaufen;
- alle konventionellen Verfahren deutliche Materialschädigungen bewirken;
- spezielle Laugenaufbereitungsanlagen erforderlich und grosse Chemikalienmengen zu entsorgen sind.

Der Erfindung liegt die Aufgabe zugrunde, ein Textil-Behandlungsverfahren der eingangs beschriebenen Art mit wässriger flotte zu bringen, das sich insbesondere durch einen hohen Wirkungsgrad auszeichnet, unerwünschte Nebenwirkungen, insbesondere Materialschädigungen, weitgehend vermeidet und nur geringe Mengen an Chemikalien erfordert, wobei eine kontinuierliche Verfahrensweise auf einer kompakten Anlage mit einem geringen Energiebedarf durchführbar sein soll.

Zur Lösung dieser Aufgabe wird von einem Verfahren der im Oberbegriff des Anspruchs 1 genannten gattungsgemässen Art ausgegangen und erfindungsgemäss vorgeschlagen, die Applikationslösung für das textile Material in einem Gewichtsverhältnis von < 1:2 gleichmässig auf das kontinuierlich transportierte Material aufzubringen und das Material anschliessend für eine Dauer von 1-120 Sekunden einem Hochfrequenzfeld zwischen 10 und 50 MHz als Energievektor auszusetzen. Im allgemeinen wird die Hochfrequenz-Exposition bis zum Erreichen einer Temperatur nahe 100°C durchgeführt.

Da vom Gesetzgeber in der deutschen Bundesrepublik für die industrielle Anwendung nur die Frequenzen 13,56 MHz, 27,12 MHz und 40,68 MHz freigegeben sind, wurden alle Versuche nur mit diesen Frequenzen durchgeführt. Es ist selbstverständlich, dass bei anderen gesetzlichen Gegebenheiten auch andere Frequenzen im Bereich von 10 bis 50 Mhz, gegebenenfalls auch unter oder über diesen Werten zur Anwendung kommen können. Die Leistung geeigneter (Röhren-) Generatoren liegt im allgemeinen zwischen 20 und 100, insbesondere zwischen 30 und 60 KW Hochfrequenzleistung. Das Hochfrequenzfeld wird zwischen (zwei) parallelen Plattenelektroden oder, insbesondere für Stückware, Streufeld-Elektroden aufgebaut. Die Streufeld-Elektroden bestehen vorzugsweise aus quer zur Laufrichtung des Materials angeordneten Rundstäben. Der Elektrodenabstand ist so zu wählen, dass funkenüberschlag auszuschliessen ist. Wegen der variablen Dicke des Materials muss dementsprechend der Elektrodenabstand einstellbar sein.

Die bei der Durchführung des erfindungsgemässen Verfahrens erforderlichen Applikationslösungen können weitgehend aus nichtätzenden Chemikalien und/oder Enzymen bestehen.

Vorzugsweise wird die Leitfähigkeit der Behandlungslösungen auf eine Leitfähigkeit von 1 bis 50 mS/cm, insbesondere 1 bis 25, vor allem 4 bis 20mS/cm eingestellt, was gegebenenfalls durch Zugabe eines Elektrolyten (z.B. Kochsalz oder Magnesiumchlorid) entsprechend beeinflusst wird.

Bei der Einwirkung des Hochfrequenzfeldes auf das mit einem sehr kurzen Flottenverhältnis getränkte Material kann in ausserordentlich eindrucksvoller Weise deutlich beobachtet werden, wie die aus dem Material zu entfernenden Abbauprodukte aus dem Inneren des Materials förmlich herausgesprengt werden und sich anschliessend von dessen Oberfläche mühelos abwaschen lassen. Nach Entfernung der Abbauprodukte und der Applikationslösungsreste liegt ein Textilmaterial vor, das sich beispielsweise bei der Bleiche zellulosischer und synthetischer fasern durch einen hohen Weissgrad (CIE-Wert) und einen gleichfalls hohen Durchschnitts-Polymerisationsgrad (DP-Wert) sowie eine grosse Saugfähigkeit auszeichnet.

Vorzugsweise wird das Material nicht bis zur Trockenheit behandelt und auch vor dem Auswaschen nicht getrocknet.

Nach einer Ausgestaltung des erfindungsgemässen Verfahrens wird das Material nach der Beendigung der Hochfrequenzbehandlung für eine bestimmte Verweilzeit auf einer durch das Hochfrequenzfeld initiierten Temperatur die im allgemeinen knapp unter 100°C liegt, gehalten, bevor die Waschbehandlung erfolgt.

Schliesslich sieht eine weitere Ausgestaltung des erfindungsgemässen Verfahrens noch vor, das Material nach Beendigung der Hochfrequenzbehandlung und vor dem Waschvorgang durch eine Wasserdampfbeaufschlagung kurze Zeit auf einer bestimmten Temperatur zu halten.

Textile Materialien im Sinne der Erfindung können beispielsweise textile flächengebilde (Gewebe, Gewirke, Non-Wovens, Faservliese), faserhaufwerke, Zwirne, Garne und dergleichen sein.

Nach dem erfindungsgemässen Verfahren wurden versuchsweise verschiedene Vorbehandlungen an Textilmaterial durchgeführt und dieses dabei nach dem Tränken mit einer Applikationslösung der nachfolgend angegebenen Rezepturbeispiele für wenige Sekunden bis maximal zwei Minuten einem Hochfrequenzfeld der angegebenen Frequenz als Energievektor ausgesetzt:

### Beispiel 1 Peroxidbleiche

a1) Entschlichtetes Baumwoll-Gewebe wird mit einer wässrigen Lösung, die pro Liter
0,3 g Magnesiumchlorid,
8 ml eines handelsüblichen Tensids (Netz-, Wasch- und Dispergiermittel, "Sandoclean^{R} PC" flüssig)
2 ml eines Sequestriermittels (Handelsprodukt "Sirrix^{R} AK" flüssig),
8 ml eines handelsüblichen Stabilisators (Poly-α-acrylsaures Natrium, Handelsname "Sifa^{R}" flüssig),
5 ml Natonlauge -36 Bé und
60 ml Wasserstoffperoxid 35%-ig
enthält, imprägniert, die Imprägnierung auf eine Trockengewichtszunahme von 80-100% abgequetscht und so durch ein Hochfrequenzfeld von 13,56 Mhz geführt, dass die Verweildauer 10 Sekunden beträgt. Der ganze Behandlungsvorgang wird wiederholt, danach wird das Gewebe gespült und getrocknet. Man erhält so eine Ware deren Weissgrad (CIE) 62,5, Saughöhe H 70 mm und der DP-Wert 2350 ist.

Auf die gleiche Weise wird a2) ein Rohbaumwoll-Gewebe,
a3) ein Baumwoll-Gewirke,
a4) entschlichtetes Baumwollgarn (in Strangform),
a5) ein Leinen-Gewebe,
a6) ein Halbleinen-Gewebe und
a7) ein Jute-Gewebe
behandelt. In all diesen fällen ist der Bleicheffekt ausgezeichnet, die Saughöhe h wird beträchtlich angehoben, wobei der Durchschnitts-Polymerisationsgrad (DP-Wert) auf einer respektablen Höhe verbleibt.
b1) Ein Wollgewebe wird mit einer wässrigen Lösung, die pro Liter
5 ml des obengenannten Tensids,
2 ml des obengenannten Stabilisators und
15 ml Wasserstoffperoxid 35%-ig enthält und mit Natriumcarbonat auf pH 9 gestellt wurde, imprägniert, auf eine Trockengewichtszunahme von 80% abgequetscht und durch ein Hochfrequenzfeld von 13,56 MHz geführt, wobei die Verweildauer dort 10 Sekunden beträgt.
b2) Wie unter b1) beschrieben, wird ein Naturseidengewebe behandelt.

In beiden Fällen erzielt man nach dem Spülen und Trocknen einen ausgezeichneten Bleicheffekt bei minimaler Faserschädigung.

### Beispiel 2 Enzymatische Bleiche von Materialien aus regenerierter Cellulose

a1) Ein Viskose-Gewebe wird mit einer wässrigen flotte, die im Liter
4 ml des obengenannten Tensids und
5 ml einer handelsüblichen Cellulase-Präparation ("Bactosol^{R} CA" fl.) enthält und mit Essigsäure auf pH 5 gestellt wurde, imprägniert, auf 90% Trockengewichtszunahme abgequetscht und mit 10 Sekunden Verweildauer durch ein Hochfrequenzfeld (13,56 MHz) geführt.

Der unter a1) angegebenen Behandlung wird auch
a2) ein Modal-Gewebe und ein
a3) Zellwoll-Gewebe unterzogen.

In allen drei fällen erzielt man nach dem Spülen und Trocknen einen sehr guten Bleicheffekt und einen hervorragenden Warengriff, bei minimaler faserschädigung.
Die praktisch gleichen Effekte werden bei Anwendung eines Hochfrequenzfeldes von 27,12 MHz und 40,68 MHz erzielt.

### Beispiel 3 Enzymatisches Abschälen von synth. Polyamid

Ein Gewebe aus synthetischem Polyamid wird wie im Beispiel 2 beschrieben, behandelt. Man erzielt so einen hervorragenden Warengriff, der einer Seide-Imitation gleichkommt. Derartige Effekte wurden bisher noch mit keiner Behandlung erreicht.

### Beispiel 4 Enzymatisches Entschlichten von Stärkeschlichten auf Rohbaumwolle

Ein entsprechendes Gewebe wird mit einer wässrigen Lösung, enthaltend pro Liter
6 ml des obengenannten Tensids und
5 ml eines handelsüblichen Amylaseprodukts ("Bactosol^{R} HTN" fl.), die mit Essigsäure auf pH 6,5 gestellt wurde, imprägniert, auf 100% Trockengewichtszunahme abgequetscht und im übrigen wie im Beisiel 2 angegeben, behandelt.

Es resultiert ein Gewebe mit der Note 5 nach Tegewa (maximal erreichbare Note), während die Rohware die Tegewa-Note 1 aufwies.

### Beispiel 5 Enzymatische Erzeugung eines "Old-fashion-Look" auf gefärbter Baumwolle

Ein mit C.I. Reactive Red 147 gefärbtes Baumwollgewebe wird gemäss dem Verfahren des Beispiels 2 behandelt. Bei grossem Zeitgewinn und geringem Wasser- und Chemikalienverbrauch resultiert ein gegenüber gemäss konventioneller Methode erzeugtem Effekt, vergleichbares Resultat.

### Beispiel 6

a) Enzymatisches Entbasten von Seide:
   Ein Seidengewebe wird mit einer mit Soda auf pH 8 gestellten wässrigen flotte, enthaltend pro Liter
   4 ml des obenerwähnten Tensids und
   4 ml eines handelsüblichen Protease-Produkts ("Bactosol^{R} SI" fl. conc.),
   auf eine Trockengewichtszunahme von 90% imprägniert und abgequetscht und sodann wie im Beispiel 2 beschrieben, weiterbehandelt.
b) Enzymatisches Entkletten bei zugleich filzfreier Behandlung von Wolle.
   Es wird wie unter a) beschrieben, verfahren. In beiden fällen resultiert eine sehr merkliche Verbesserung des Warengriffes.

### Beispiel 7 Enzymatische Reinigung von Wolle an Stelle von chemischem Carbonisieren mit Schwefelsäure

Ein Wollgewebe wird mit einer wässrigen flotte, enthaltend pro Liter
4 ml des obenerwähnten Tensids,
4 ml eines handelsüblichen Cellulase-Präparates ("Bactosol^{R} CA" fl.) und
4 ml Lipase (Handelsprodukt "Bactosol^{R} LI" fl.),
die mit Essigsäure auf ph 5,5 gestellt wurde, imprägniert, die Imprägnierung auf 100% Trockengewichtszunahme abgequetscht und wie im Beispiel 2 beschrieben, weiterbehandelt. Das erhaltene Wollgewebe ist gründlich entfettet, der Klettabbau ist sehr gut und der Warengriff ist deutlich verbessert.

### Beispiel 8 Protonische Behandlung von stark pigmentierter und mineralhaltiger Baumwolle

Ein entsprechendes Rohbaumwoll-Gewebe wird mit einer wässrigen flotte, enthaltend pro Liter
4 ml des obenerwähnten Tensids und
10 ml einer Säurekombination aus
15% Zitronensäure, 15% Natriumglukonat, 3,2% Salzsäure und
66,8% Wasser (alle Prozente sind Gewichtsprozente) imprägniert, auf 90% Trockengewichtszunahme abgequetscht und im übrigen wie im Beispiel 2 beschrieben weiterbehandelt. Das so behandelte Gewebe ist gründlich von allen Unreinheiten befreit und entfettet.

### Beispiel 9 Enzymatisches Abkochen

Baumwollgarn in Strangform wird mit einer wässrigen flotte, enthaltend pro Liter
5 ml des obenerwähnten Tensids und
5 ml einer handelsüblichen Lipasepräparation ("Bactosol^{R} LI" fl.), die mit Soda auf pH 8 gestellt wurde, imprägniert, auf 90% Trockengewichtszunahme abgequetscht und wie in Beispiel 2 beschrieben, weiterbehandelt. Man erhält so todellos entfettetes Baumwollgarn. Die Anwendung des erfindungsgemässen Verfahrens ist keineswegs auf die vorbeschriebenen Ausführungesbeispiele beschränkt, sondern lässt sich insbesondere auch zur optischen Aufhellung von verschiedenen fasern, zum Laugieren von Zellulosefasern, zum Abschälen von Polyester und dergleichen Vorbehandlungsverahren in besonders vorteilhafter Weise anwenden.

## Patentansprüche

1. Verfahren zur veredelnden Behandlung eines textilen Materials, wobei das Material zunächst mit einer Applikationslösung getränkt wird und nach Erreichen des angestrebten Effekts Abbauprodukte und Reste der Applikationslösung ausgewaschen werden, dadurch gekennzeichnet, dass die Applikationslösung für das textile Material in einem Gewichtsverhältnis von < 1:2 gleichmässig auf das kontinuierlich transportierte Material aufgebracht wird und dieses anschliessend für eine Dauer von 1 bis 120 Sekunden einem Hochfrequenzfeld zwischen 10 und 50 MHz als Energievektor ausgesetzt wird.

2. Verfahren gemäss Anspruch 1, dadurch gekennzeichnet, dass die Behandlung dem Reinigen, Entfetten, Abschälen und/oder Bleichen von natürlichem,halb- und vollsynthetischem textilem Fasermaterial dient.

3. Verfahren gemäss Anspruch 1 oder 2, dadurch gekennzeichnet, dass die Behandlung in Gegenwart eines oder mehrerer Enzyme durchgeführt wird.

4. Verfahren gemäss Anspruch 1, zum veredelnden Behandeln von Färbungen auf cellulosischen textilen Fasermaterialien, dadurch gekennzeichnet, dass man die mit einem Direkt- oder Reaktivfarbstoff hergestellte Färbung im Hochfrequenzfeld in Gegenwart einer Cellulase behandelt.

5. Verfahren nach einem der vorhergehenden Ansprüche, dadurch gekennzeichnet, dass zwischen der Behandlung und dem Auswaschen keine Trocknung des Materials durchgeführt wird.

6. Verfahren nach einem der vorhergehenden Ansprüche, dadurch gekennzeichnet, dass das Material nach der Beendigung der Hochfrequenzbehandlung für eine bestimmte Verweilzeit auf einer durch das Hochfrequenzfeld initiierten Temperatur gehalten wird, bevor die Waschbehandlung erfolgt.

7. Verfahren nach einem der vorhergehenden Ansprüche, dadurch gekennzeichnet, dass das Material nach Beendigung der Hochfrequenzbehandlung und vor dem Waschvorgang durch eine Wasserdampfbeaufschlagung auf einer bestimmten Temperatur gehalten wird.
